Europäisches Patentamt

European Patent Office

Office européen des brevets

(11) Publication number : **0 511 143 A1**

(12) **EUROPEAN PATENT APPLICATION**

(21) Application number : **92480043.6**

(22) Date of filing : **13.03.92**

(51) Int. Cl.⁵ : **G06F 15/16**

(30) Priority : **18.04.91 US 687277**

(43) Date of publication of application :
**28.10.92 Bulletin 92/44**

(84) Designated Contracting States :
**DE FR GB**

(71) Applicant : **International Business Machines
Corporation
Old Orchard Road
Armonk, N.Y. 10504 (US)**

(72) Inventor : **Nimtz, Daniel G.
1142 Fox Croft Lane, S.W.
Rochester, MN 55902 (US)**
Inventor : **Sandberg, Sven O.
585 E. 50th Street
American Fork, Utah 84003 (US)**

(74) Representative : **Vekemans, André
Compagnie IBM France Département de
Propriété Intellectuelle
F-06610 La Gaude (FR)**

(54) **Method and apparatus for automated software module capability determination within a data processing system.**

(57)   A method and apparatus for automated software module capability determination whereby one software module may determine the existence of required capabilities within a second software module. A capability list interface object is created, including fixed fields utilized to identify a plurality of required and/or desired software capabilities and a response code field for each listed capability. The capability list interface object is then transmitted to one or more servers which may include additional software modules. Upon receipt of a capability list interface object, the response code fields therein are automatically altered to indicate whether or not each listed capability is supported by the recipient. Thereafter, the capability list interface object is returned to the requesting software module (120) so that the existence of required capabilities may be determined. An overall response code field is also provided within the capability list interface object in order to permit a requesting software module to rapidly determine if all listed required capabilities are supported by a selected server (124, 126, 128).

Fig. 5

EP 0 511 143 A1

## BACKGROUND OF THE INVENTION

### 1. Technical Field

The present invention relates in general to the field of data processing systems and in particular to the field of data processing systems supporting multiple interactive software modules. Still more particularly, the present invention relates to an improved method and apparatus for permitting one software module to determine the existence of a required capability within a second software module.

### 2. Description of the Related Art:

Complex data processing systems are well known in the art today. Often such systems involve distributed processors located vast geographic distances from each other; however, modern electronic communication permits such distributed systems to operate with great rapidity and efficiency. Additionally, modern state-of-the-art computer systems often utilize multiple software modules. By "software module" what is meant is multiple software applications, procedures, or groups of applications and procedures which exist within a data processing system.

Communication between multiple software modules is also well known in the art; however, a problem exists due to the continual improvement and alteration of existing software modules. It is not uncommon for a distributed data processing system operated by a single entity to include many different versions of the same software module or application within that system. Communicatian and/or cooperation between multiple software modules in such a system is thus rendered much more difficult due to the uncertainty regarding the capabilities and functions available from a software module.

The present method utilized to avoid problems which result from variation in capability of software modules within a data processing system requires a software module to access a second software module and determine the version number of that software module prior to attempting cooperation or communication with that module. Additionally, the requesting software module must then possess knowledge of the capabilities of each version of the second software module in order to determine whether or not the capabilities required by the first software module-are present within the version of the second software module which exists within the system.

Thus, it should be obvious that a need exists for a method whereby multiple interactive software modules within a data processing system may automatically determine the existence of a required capability within a second software module without requiring specific knowledge as to the capabilities of the various versions of that software module.

## SUMMARY OF THE INVENTION

It is therefore one object of the present invention to provide an improved data processing system.

It is another object of the present invention to provide an improved data processing system supporting multiple interactive software modules.

It is yet another object of the present invention to provide an improved method and apparatus for permitting one software module to determine the existence of a required capability within a second software module within a data processing system.

The foregoing objects are achieved as is now described. The method and apparatus of the present invention provide automated software module capability determination whereby one software module may determine the existence of required capabilities within a second software module. A capability list interface object is created, including fixed fiends utilized to identify a plurality of required and/or desired software capabilities, and a response code field for each listed capability. The capability list interface object is then transmitted to one or more servers which may include additional software modules. Upon receipt of a capability list interface object, the response code fields therein are automatically altered to indicate whether or not each listed capability is supported by the recipient. Thereafter, the capability list interface object is returned to the requesting software module so that the existence of required capabilities may be determined. An overall response code field is also provided within the capability list interface object in order to permit a requesting software module to rapidly determine if all listed required capabilities are supported by a selected server.

## BRIEF DESCRIPTION OF THE DRAWING

The invention, as well as a preferred mode of use, further objects and advantages thereof, will best be understood by reference to the following detailed description of an illustrative embodiment when read in conjunction with the accompanying drawings, wherein:

Figure 1 is a pictorial representation of a distributed data processing system which may be utilized to implement the method and apparatus of the present invention;

Figure 2 is a graphic representation of a capability list interface object which may be utilized to implement the method and apparatus of the present invention;

Figure 3 a logic flowchart illustrating the creation of a capability list interface object by a requesting software module in accordance with the method and apparatus of the present invention;

Figure 4 is a logic flowchart illustrating the alteration of a capability list interface object by a recipient software module in accordance with the method and apparatus of the present invention;

Figure 5 is a logic flowchart illustrating the processing of a returned capability list interface object by a requesting software module in accordance with the method and apparatus of the present invention; and

Figure 6 is a logic flowchart illustrating the processing of a returned optional capability list information object by a requesting software module in accordance with the method and apparatus of the present invention.

## DETAILED DESCRIPTION OF PREFERRED EMBODIMENT

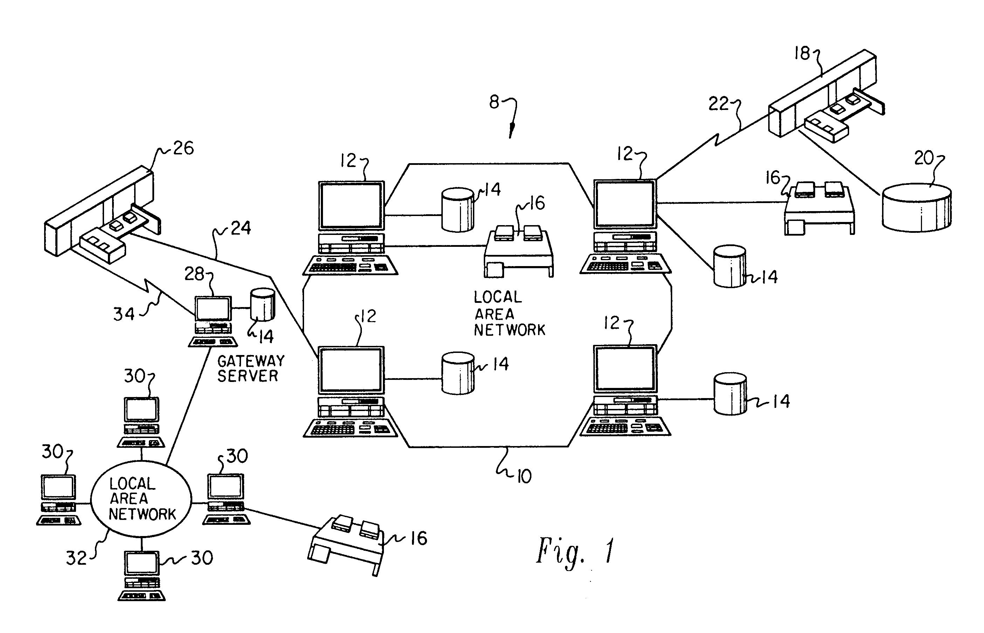

With reference now to the figures and in particular with reference to Figure 1, there is depicted a pictorial representation of a distributed data processing system 8 which may be utilized to implement the method and apparatus of the present invention. As may be seen, data processing system 8 may include a plurality of networks, such as Local Area Network (LAN) 10 and 32, each of which preferably includes a plurality of individual computers 12 and 30, respectively. Of course, those skilled in the art will appreciate that a plurality of Intelligent Work Stations (IWS) coupled to a host processor may be utilized for each such network.

As is common in such data processing systems, each computer may be coupled to a storage device 14 and/or a printer/output device 16. Still referring to Figure 1, it may be seen that distributed data processing system 8 also includes multiple central computer systems, such as central computer system 18, which may be preferably coupled to Local Area Network (LAN) 10 by means of communications link 22. In the depicted embodiment of distributed data processing system 8 central computer 18 may be implemented utilizing an IBM System/370, although other computer systems, such as an IBM Application System/400 or PS/2 may also be utilized. In addition, a central computer system may not be necessary if one or more Local Area Networks are sufficient to connect all desired users within distributed data processing system 8.

Central computer system 18 may also serve as remote storage for Local Area Network (LAN) 10. Similarly, Local Area Network (LAN) 10 may be coupled via communications link 24 through a subsystem control unit/communications controller 26 and communications link 34 to gateway server 28. Gateway server 28 is preferably an individual computer or Intelligent Work Station (IWS) which serves to link Local Area Network (LAN) 32 to Local Area Network (LAN) 10 such that electronic communications between individuals within the network may be easily achieved.

As discussed above with respect to Local Area Network (LAN) 32 and Local Area Network (LAN) 10, a plurality of software modules or procedures may be stored within storage device 20 and controlled by a central computer system 18, as Resource Manager or Library Service for the software modules thus stored. Of course, those skilled in the art will appreciate that central computer system 18 may be located a great geograhical distance from Local Area Network (LAN) 10 and similarly Local Area Network (LAN) 10 may be located a substantial distance from Local Area Network (LAN) 32. That is, Local Area Network (LAN) 32 may be located in California, while Local Area Network (LAN) 10 may be located in Texas and central computer system 18 may be located in New York.

As will be appreciated upon reference to the foregoing, it is often desirable for users within one portion of distributed data processing system 8 to be able to utilize software modules or procedures within another portion of distributed data processing system 8. For example, central computer system 18 may include a communications router software module which may be utilized to route communications between various entities located within distributed data processing system 8. A user within distributed data processing system 8 desiring to utilize the capabilities of the communications router software module will typically transmit a request for such utilization to central computer system 18.

Those skilled in the art will appreciate that a communications router software module may have many different functions and capabilities. For example, one communications router may support the Twinaxial connection, Token Ring networks, Ethernet networks, and not support the X.25 standard. Another communications router may support all of those connection functions. Thus, it should be apparent that a need exists for a method whereby the capabilities of selected software modules within distributed data processing system 8 may be rapidly, efficiently and automatically determined. Further, interactive software modules may exist within a single computer system. Those skilled in the art will appreciate that communication and/or cooperation between two software modules within the same computer system may also utilize the method and apparatus of the present invention.

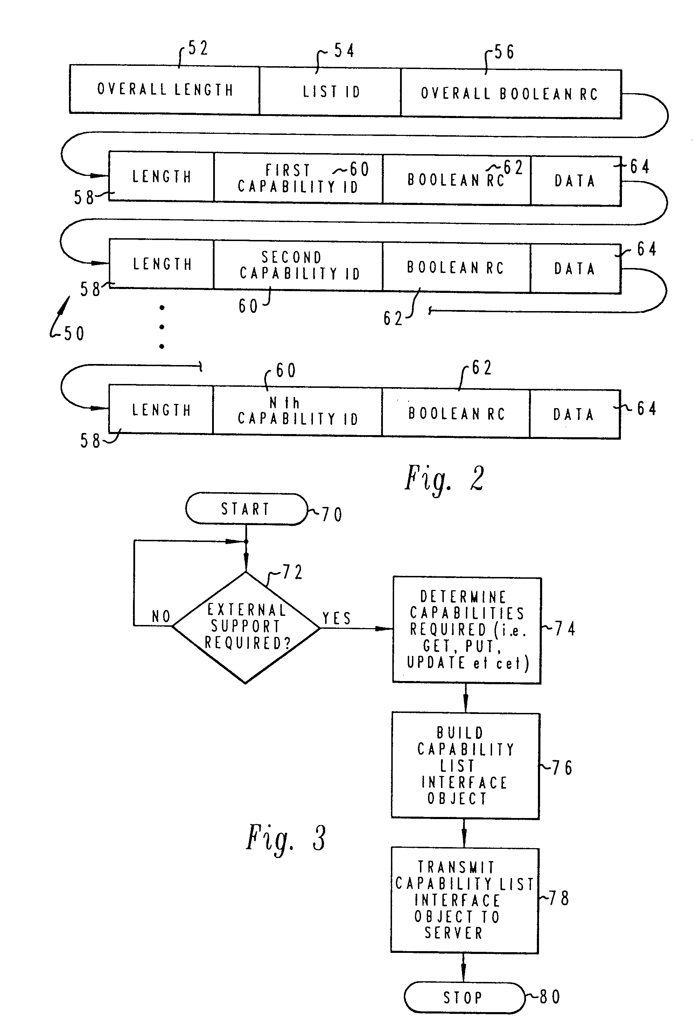

Referring now to Figure 2, there is depicted a graphic representation of a capability list interface object 50 which may be utilized to implement the method and apparatus of the present invention. As depicted graphically, capability list interface object 50 is a data structure of a form which may be readily transmitted between software modules within distributed data processing system 8 (see Figure 1). Field 52 within capability list interface object 50 is utilized, in the depicted embodiment of the present invention, to specify the overall length in bytes of capability list interface object 50. Next, field 54 is utilized to identify the data structure as a capability list interface object. Field 56 within capability list interface object 50 is an overall Boolean response code field, which will be utilized, in a manner which will be explained in greater detail herein, to permit a software module utilizing the capability list interface object to rapidly and efficiently determine whether or not a server will support all capabilities required by that software module.

Next, capability list interface object 50 includes a plurality of capability list fields, each of which includes a length field 58. Length field 58 is utilized to specify the total length of a capability list field within capability list interface object 50. Thereafter, as illustrated, each capability list field includes a capability identification field 60. Within capability identification field 60 is listed an identification of selected capabilities which are required by the requesting software module. For example, specific capabilities or functions, such as "GET," "PUT," and "UPDATE" are examples of the type of capability which may be listed within capability identification field 60.

After listing an identification of each of a plurality of capabilities required by a requesting software module, each capability list field also includes a Boolean response code field 62. Boolean response code field 62 is utilized, in a manner which will be explained in greater detail below, to indicate whether or not the server software module receiving capability list interface object 50 is capable of supporting a particular requested capability. Finally, each capability list field includes a data field 64 which may be utilized to include various data, comment, or other information which may be required to further ascertain the specific capabilities of a selected software module.

With reference now to Figure 3, there is depicted a logic flowchart illustrating the creation of a capability list interface object by a requesting software module, in accordance with the method and apparatus of the present invention. As illustrated, the process begins at block 70 and thereafter passes to block 72 which depicts a determination of whether or not external support is required. By "external support" we mean, does the requesting software module require capabilities which are not present within that software module and which must be supported by another software module in an interactive manner? In the event external support is not required, the process merely iterates until such time as a request for external support occurs.

Still referring to block 72, in the event external support is required, the process passes to block 74. Block 74 illustrates a determination of what capabilities are required by the requesting software module. For example, the capabilities of "GET," "PUT," and "UPDATE" may be supported by other software modules within the data processing system, but not supported by the requesting software module. Next, block 76 depicts the building of a capability list interface object, such as that depicted within Figure 2. Block 78 illustrates the transmittal of this capability list interface object to a server or other interactive software module within the data processing system. Thereafter, the process terminates, as depicted in block 80.

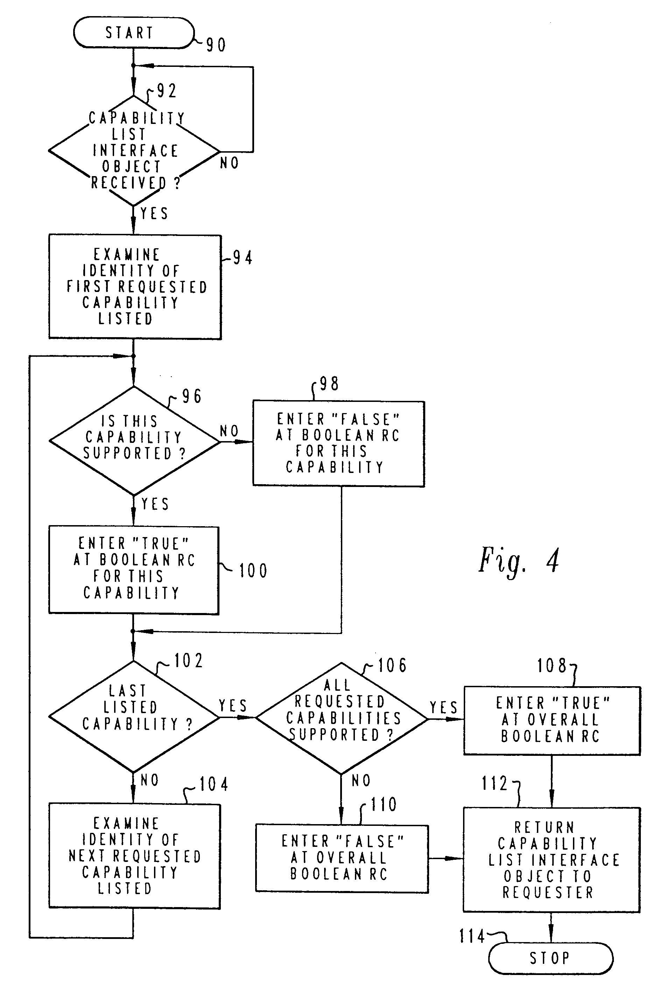

Referring now to Figure 4, there is depicted a logic flowchart illustrating the alteration of a capability list interface object by a recipient software module in accordance with the method and apparatus of the present invention. As above, the process begins at block 90 and thereafter passes to block 92 which depicts the determination of whether or not a capability list interface object has been received. If not, the process merely iterates until such time as a capability list interface object is received.

After receiving a capability list interface object the process passes to block 94, which depicts an examination of the identity of the first requested capability listed within a capability list field of the capability list interface object (see Figure 2). Thereafter, block 96 illustrates a determination of whether or not the first requested capability is supported and if not, the process passes to block 98. Block 98 illustrates the entering of a "FALSE" value within the Boolean response code field associated with this capability. Those skilled in the art will appreciate that Boolean true or false values may be simply and efficiently represented by the binary value zero, and the binary value one.

Referrins again to block 96 in the event the requested capability listed within the capability list interface object supported by the receiving software module, the process passes to block 100 which depicts the entering of a "TRUE" value within the Boolean response code field associated with that capability.

After entering either a "FALSE" or "TRUE" value within the Boolean response code field associated with that capability, the process passes to block 102. Block 102 illustrates a determination of whether or not the capability under consideration is the last listed capability within the capability list interface object, and if not, the process passes to block 104. Block 104 depicts the examination of the identity of the next requested capability listed within a capability list field of the capability list interface object and the process returns iteratively to block 96 for a determination of whether or not this capability is supported.

Referring again to block 102, in the event the current listed capability under consideration is the last listed capability within the capability list interface object, the process passes to block 106. Block 106 illustrates a determination of whether or not all requested capabilities within the capability list interface object are supported, and if so, the process passes to block 108. Block 108 illustrates the entering of a "TRUE" value within the overall Boolean response code field of the capability list interface object (see Figure 2).

Referring again to block 106, in the event any requested capability listed within the capability list interface object are not supported, the process passes to block 110, which illustrates the entering of a "FALSE" value within the overall Boolean response code field of the capability list interface object. In either case, the process then passes to block 112, which illustrates the returning of the capability list interface object to the requesting software module. The process then terminates, as depicted in block 114.

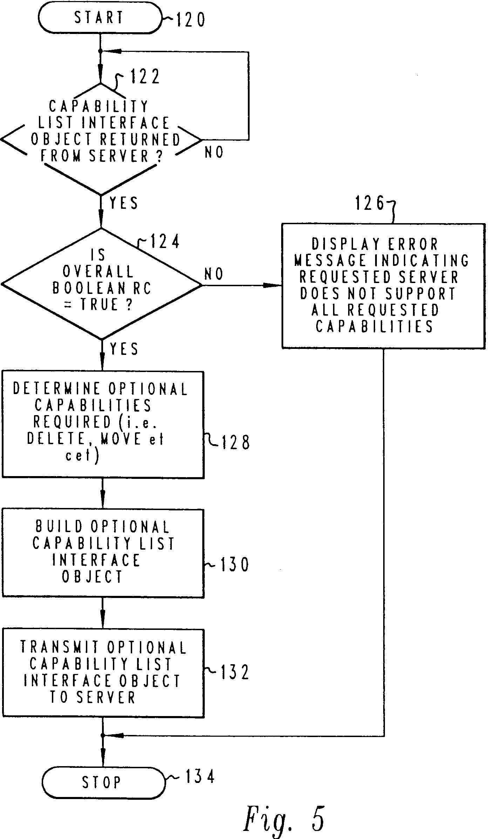

With reference now to Figure 5, there is depicted a logic flowchart illustrating the processing of a returned capability list interface object by a requesting software module in accordance with the method and apparatus of the present invention. The process depicted within Figure 5 begins at block 120 and thereafter passes to block 122. Block 122 illustrates a determination of whether or not a capability list interface object has been returned from a server or other software module. If not, the process merely iterates until such time as the capability list interface object is returned.

After detecting the return of a capability list interface object the process passes to block 124. Block 124 depicts a determination of whether or not the value within the overall Boolean response code field of the received capability list interface object is "TRUE," indicating that the server supports all requested capabilities listed within the capability list interface object. If not, the process passes to block 126

Block 126 depicts the displaying of an error message within the data processing system, indicating that the requested server does not support all requested capabilities, and the process then terminates, as depicted at block 134.

Referring again to block 124, in the event the value within the overall Boolean response code field is equal to "TRUE" the process passes to block 128. Block 128 illustrates another important feature of the present invention wherein the first software module may determine certain optional capabilities which may be required by that software module. That is, capabilities which are desired but not required in order to accomplish a specific task. Thereafter, the process passes to block 130 which illustrates the building of an optional capability list interface object.

Those skilled in the art will appreciate that an optional capability list interface object may be constructed in the identical fashion to the capability list interface that object depicted within Figure 2; however, the capabilities listed therein are considered optional and the absence of a support of any such capability by a server will not terminate the process. Thereafter, block 132 depicts the transmittal of the optional capability list interface object to a selected server and the process terminates, as depicted in block 134.

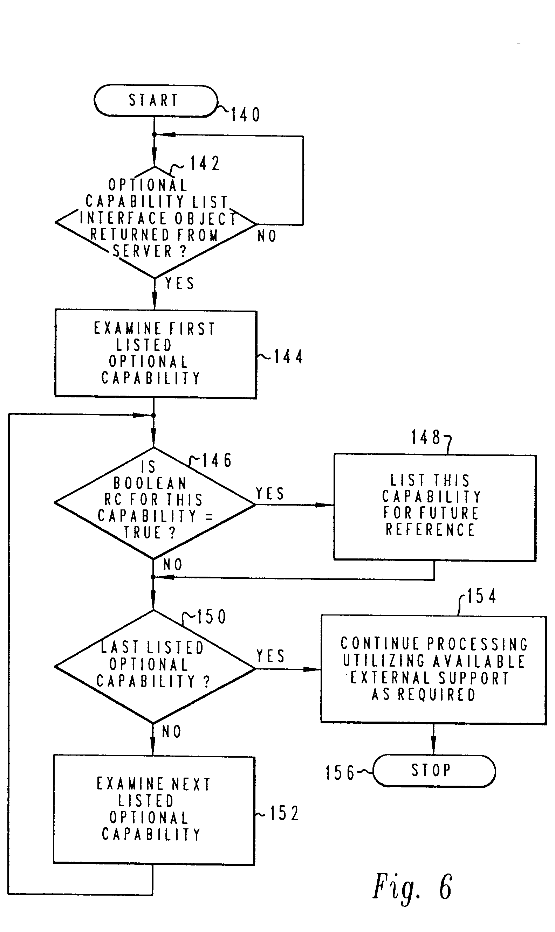

Finally, referring to Figure 6, there is depicted a logic flow chart illustrating the processing of a returned optional capability list interface object by a requesting software module in accordance with the method and apparatus of the present invention. Those skilled in the art, upon reference to the specification contained herein, will appreciate that the alteration of an optional capability list interface object at a recipient software module will occur in an identical fashion to that depicted within Figure 4 herein.

As above, this process begins at block 140 and thereafter passes to block 142, which illustrates a determination of whether or not an optional capability list interface object has been returned from a server. If not, the process merely iterates until such time as an optional capability list interface object is returned.

Upon the occurrence of a return of an optional capability list interface object from the server, the process passes to block 144. Block 144 depicts the examination of the first listed optional capability within the optional capability list interface object. Next, the process passes to block 146 which illustrates a determination of whether the entry within the Boolean response code field for this optional capability is equal to "TRUE" and if so, the process passes to block 148 which depicts the listing of this capability for future reference.

Still referring to block 146, in the event the entry within the Boolean response code for this optional capability is not equal to "TRUE," the process passes to block 150 for a determination of whether or not the listed optional capability is the last listed optional capability within the optional capability list interface object. If not, the process merely passes to block 152 for an examination of the next listed optional capability and then returns to block 146 to process that information in an iterative fashion.

Referring again to block 150, in the event the current optional capability listed within the optional capability list interface object is the last optional capability within that object, the process passes to block 154. Block 154 illustrates the continued processing of data by the requesting software module utilizing available external support, as required. Thereafter, the process terminates, as depicted in block 156.

Upon reference to the foregoing those skilled in the art will appreciate that the Applicants herein have provided a novel, efficient, and automatic method whereby the existence of support for a particular capability by one software module may be determined by a second software module without requiring advance information regarding the known capabilities of various versions of software modules. In this manner, specific capabilities may be identified and requested and the optimal server or software module which supports those capabilities may be rapidly and easily identified.

## Claims

1. The method in a data processing system for permitting a first software module to automatically determine the existence of required capabilities within a second software module, said method comprising the steps performed within a data processing system of:

defining a capability list interface object within said data processing system;

listing within said capability list interface object an identification of each of a plurality of capabilities required by a first software module;

thereafter transmitting said capability list interface object to a second software module;

in response to a receipt of said capability list interface object at said second software module, permitting said second software module to alter said capability list interface object to indicate which of said plurality of capabilities are supported by said second software module; and

transmitting said altered capability list interface object to said first software module wherein the existence of required capabilities may be determined.

2. The method in a data processing system for permitting a first software module to automatically determine the existence of required capabilities within a second software module according to Claim 1, wherein said step of defining a capability list interface object within said data processing system further includes the step of defining a response code field in association with each required capability listed therein.

3. The method in a data processing system for permitting a first software module to automatically determine the existence of required capabilities within a second software module according to Claim 2, wherein said step of permitting said second software module to alter said capability list interface object to indicate which of said plurality of capabilities are supported by said second software module comprises the step of entering a response code into said response code field associated with each of said plurality of capabilities.

4. The method in a data processing system for permitting a first software module to automatically determine the existence of required capabilities within a second software module according to Claim 2, wherein said step of defining a capability list interface object within said data processing system further includes the step of defining an overall response code field for all required capabilities listed therein.

5. The method in a data processing system for permitting a first software module to automatically determine the existence of required capabilities within a second software module according to Claim 4, wherein said step of permitting said second software module to alter said capability list interface object to indicate which of said plurality of capabilities are supported by said second software module comprises the step of entering an overall response code into said overall response code field indicating all of said plurality of capabilities are supported by said second software module.

6. The method in a data processing system for permitting a first software module to automatically determine the existence of required capabilities within a second software module according to Claim 1, further including the step of listing within said capability list interface object an identification of each of a plurality of capabilities considered optional by a first software module.

7. The method in a data processing system for permitting a first software module to automatically determine the existence of required capabilities within a second sotware module according to Claim 1, further including the step of generating an error message within said data processing system in response to a failure of said second software module to support all of said plurality of capabilities required by said first software module.

8. A data processing system for permitting a first software module to automatically determine the existence of required capabilities within a second software module, said data processing system comprising:

means for defining a capability list interface object within said data processing system;

means for listing within said capability list interface object an identification of each of a plurality of capabilities required by a first software module;

means for thereafter transmitting said capability list interface object to a second software module;

means for altering said capability list interface object to indicate which of said plurality of capabilities are supported by said second software module in response to a receipt of said capability list interface object at said second software module; and

means for transmitting said altered capability list interface object to said first software module

9. The data processing system for permitting a first software module to automatically determine the existence of required capabilities within a second software module according to Claim 8, further including means for defining a response code field in association with each required capability listed within said capability list interface object.

10. The data processing system for permitting a first software module to automatically determine the existence of required capabilities within a second software module according to Claim 9, wherein said means for altering said capability list interface object to indicate which of said plurality of capabilities are supported by said second software module comprises means for entering a response code into said response code field associated with each of said plurality of capabilities.

Fig. 1

LOCAL AREA NETWORK

LOCAL AREA NETWORK

GATEWAY SERVER

EP 0 511 143 A1

| OVERALL LENGTH ⌐52 | LIST ID ⌐54 | OVERALL BOOLEAN RC ⌐56 |
|---|---|---|

| LENGTH | FIRST ~60 CAPABILITY ID | BOOLEAN RC ~62 | DATA ⌐64 |
|---|---|---|---|

58

| LENGTH | SECOND CAPABILITY ID | BOOLEAN RC | DATA ⌐64 |
|---|---|---|---|

58    60    62

~50

| LENGTH | N th CAPABILITY ID ⌐60 | BOOLEAN RC ⌐62 | DATA ~64 |
|---|---|---|---|

58

*Fig. 2*

START ~70

↓

EXTERNAL SUPPORT REQUIRED? ⌐72

NO → (loop back)

YES →

DETERMINE CAPABILITIES REQUIRED (i.e. GET, PUT, UPDATE et cet) ~74

↓

BUILD CAPABILITY LIST INTERFACE OBJECT ~76

↓

TRANSMIT CAPABILITY LIST INTERFACE OBJECT TO SERVER ~78

↓

STOP ~80

*Fig. 3*

START — 90

CAPABILITY
LIST
INTERFACE
OBJECT
RECEIVED ?  — 92

NO

YES

EXAMINE
IDENTITY OF
FIRST REQUESTED
CAPABILITY
LISTED  — 94

IS THIS
CAPABILITY
SUPPORTED ?  — 96

NO

ENTER "FALSE"
AT BOOLEAN RC
FOR THIS
CAPABILITY  — 98

YES

ENTER "TRUE"
AT BOOLEAN RC
FOR THIS
CAPABILITY  — 100

*Fig. 4*

LAST
LISTED
CAPABILITY ?  — 102

YES

ALL
REQUESTED
CAPABILITIES
SUPPORTED ?  — 106

YES

ENTER "TRUE"
AT OVERALL
BOOLEAN RC  — 108

NO  — 104

NO

EXAMINE
IDENTITY OF
NEXT REQUESTED
CAPABILITY
LISTED

ENTER "FALSE"
AT OVERALL
BOOLEAN RC  — 110

RETURN
CAPABILITY
LIST INTERFACE
OBJECT TO
REQUESTER  — 112

STOP  — 114

START —120

122
CAPABILITY
LIST INTERFACE
OBJECT RETURNED
FROM SERVER ?          NO

YES

IS
OVERALL          —124
BOOLEAN RC          NO
= TRUE ?

126
DISPLAY ERROR
MESSAGE INDICATING
REQUESTED SERVER
DOES NOT SUPPORT
ALL REQUESTED
CAPABILITIES

YES

DETERMINE OPTIONAL
CAPABILITIES
REQUIRED (i.e.
DELETE, MOVE et          —128
cet)

BUILD OPTIONAL
CAPABILITY LIST
INTERFACE          —130
OBJECT

TRANSMIT OPTIONAL
CAPABILITY LIST
INTERFACE OBJECT          —132
TO SERVER

STOP —134

*Fig. 5*

*Fig. 6*

EP 0 511 143 A1

European Patent
Office

**EUROPEAN SEARCH REPORT**

Application Number

EP    92 48 0043

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-0 295 380 (IBM) <br> * abstract; figures 6-8 * <br> * page 4, line 48 - page 7, line 48 * <br> --- | 1-3,6-10 | G06F15/16 |
| Y | EP-A-0 376 316 (IBM) <br> * abstract * <br> * page 10, line 29 - line 58 * <br> * page 12, line 16 - line 42; figure 3 * <br> --- | 1-3,6-10 | |
| A | WO-A-8 602 751 (TELEVERKET) <br> * abstract * <br> * page 2, line 20 - page 4, line 31 * <br> ----- | 1-10 | |

TECHNICAL FIELDS SEARCHED (Int. Cl.5)

G06F

The present search report has been drawn up for all claims

| Place of search | Date of completion of the search | Examiner |
|---|---|---|
| THE HAGUE | 10 AUGUST 1992 | MCDONAGH F.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

13